# FASCICULE DE BREVET EUROPEEN

(11) **EP 3 074 436 B1**
(45) Date de publication et mention de la délivrance du brevet: **15.07.2020**
(21) Numéro de dépôt: 14821714.4
(22) Date de dépôt: 17.11.2014
(51) Int. Cl.: C08F 20/06, C08F 2/38, C08K 3/32, C08K 5/375

(54) **PROCEDE DE POLYMERISATION DE L'ACIDE METH(ACRYLIQUE) EN SOLUTION, SOLUTIONS DE POLYMERES OBTENUES ET LEURS UTILISATIONS**
VERFAHREN ZUR POLYMERISATION VON (METH)ACRYLSÄURE IN EINER LÖSUNG, DARAUS GEWONNENE POLYMERLÖSUNGEN UND VERWENDUNGEN DAVON
METHOD FOR POLYMERISING METH(ACRYLIC) ACID IN A SOLUTION, POLYMER SOLUTIONS OBTAINED AND USES THEREOF

(30) Priorité: 26.11.2013 FR 1361631
(43) Date de publication de la demande: 05.10.2016
(73) Titulaire: COATEX, 69730 Genay (FR)
(72) Inventeur: SUAU, Jean-Marc, F-69480 Lucenay (FR)
(74) Mandataire: Balmefrezol, Ludovic Francis Pierre
(86) Numéro de dépôt international: PCT/FR2014/052929
(87) Numéro de publication internationale: WO 2015/079140

(56) Documents cités:
- WO-A1-2005/095466
- "Effect of the chemical natures of a monomer and a leaving group in symmetric trithiocarbonate as a reversible addition-fragmentation chain-transfer agent on the position of the trithiocarbonate group in macromolecules", POLYMER SCIENCE SERIES B, vol. 55, no. 9-10, septembre 2013 (2013-09), pages 515-525, XP002721530, DOI: 10.1134/S156009041308006X

## Description

### Domaine de l'invention

La présente invention concerne le domaine technique de la polymérisation radicalaire de l'acide (méth)acrylique. Plus précisément, la présente invention concerne un nouveau procédé de polymérisation radicalaire, les polymères ainsi obtenus et leurs applications dans l'industrie.

### Arrière-plan de l'invention

Les procédés de polymérisation radicalaire nécessitent classiquement la mise en contact dans au moins un solvant de monomères à polymériser, d'un agent de transfert de chaîne, d'une source de radicaux libres et éventuellement d'un catalyseur.

L'objectif principal lorsqu'il s'agit d'un procédé de polymérisation est l'obtention d'un polymère qui présente une masse moléculaire adaptée à l'application que l'on souhaite en faire. La présente invention vise l'obtention de polymères de masse moléculaire inférieure à 8 000 g/mol, par exemple de l'ordre de 6 000 g/mol.

Il existe différents procédés de polymérisation radicalaire.

On peut d'abord citer les méthodes qui mettent en œuvre des solvants organiques tels que des alcools secondaires comme l'isopropanol. Ces méthodes ne sont aujourd'hui pas satisfaisantes car elles génèrent des composés organiques volatils (COV ou en anglais VOC). D'une part, il est nécessaire d'éliminer ces solvants en fin de réaction, ce qui a pour effet de complexifier le procédé industriel de préparation du polymère. D'autre part, les effets sur la santé et sur l'environnement de ces solvants sont reconnus comme très néfastes, de sorte qu'on recherche à éviter d'en produire. Enfin, même après purification (distillation), il reste toujours des traces de solvant dans la solution de polymères.

Il existe d'autres méthodes de synthèse de polymères polyacryliques qui ont lieu dans l'eau et ne génèrent pas de composés organiques volatils.

Parmi les différents procédés de polymérisation radicalaire, on peut également citer la polymérisation radicalaire contrôlée de type RAFT (Reversible Addition Fragmentation chain Transfer) qui permet de réaliser la polymérisation vivante d'un monomère. Un tel procédé permet en outre d'obtenir des polymères présentant de faibles indices de polydispersibilité IP (également appelé indice de polymolécularité), ce qui les rend particulièrement efficaces pour certaines applications.

Pour mettre en œuvre une polymérisation radicalaire contrôlée de type RAFT, et ainsi obtenir un polymère de masse moléculaire attendue présentant un bon indice IP, il est important d'introduire dans le milieu réactionnel une quantité disponible d'agent de transfert de chaîne, autrement dit d'engager une quantité d'agent de transfert de chaîne telle que chaque chaîne à polymériser soit fonctionnalisée par un agent de transfert de chaîne. En outre, il est important que cet agent de transfert de chaîne soit d'ores et déjà disponible lorsque la polymérisation est initiée, c'est-à-dire lorsque l'on chauffe le réacteur de polymérisation et que l'on génère des radicaux. Ceci implique que des quantités importantes d'agent de transfert de chaîne doivent être mises en œuvre dans un procédé de polymérisation radicalaire contrôlée de type RAFT.

Malgré tous les avantages résultant d'une polymérisation RAFT, l'utilisation de telles quantités d'agent de transfert de chaîne présentent un certain nombre d'inconvénients. Tout d'abord, il s'avère que les agents de transfert de chaîne sont des produits coûteux, ce qui a une incidence non négligeable sur le coût du polymère obtenu.

De plus, lorsqu'on utilise des agents de transfert de chaîne soufrés tel que décrits dans les documents WO 02/070571, WO 2005/095466 et WO 2006/024706, on constate qu'une fraction de ces composés va être dégradée en sous-produits soufrés libres du type CS₂ et H₂S, et se retrouver dans la solution aqueuse de polymère final et dans les eaux d'écoulement du procédé, pouvant ainsi avoir un impact négatif sur l'être humain et sur l'environnement. En outre, la présence de ces sous-produits soufrés dans la solution aqueuse génère lors de l'utilisation du polymère des dégagements gazeux nocifs pour l'être humain.

Il existe des méthodes alternatives à la polymérisation radicalaire contrôlée de type RAFT. Selon l'une d'entre elles, on utilise de l'eau oxygénée qui joue le rôle d'initiateur, ainsi que, par exemple, du sulfate de cuivre qui joue le rôle de catalyseur et d'agent de transfert de chaîne. Néanmoins, pour aboutir à un polymère qui présente une masse moléculaire inférieure à 8 000 g/mol, par exemple de l'ordre de 6 000 g/mol, il est nécessaire d'engager des quantités importantes de catalyseur, ce qui génère des quantités importantes de sous-produits polluants.

Alternativement, on utilise l'acide thiolactique, ou un autre mercaptan RSH, en tant qu'agent de transfert de chaîne supplémentaire, mais, à nouveau, pour obtenir un polymère qui présente une masse moléculaire inférieure à 8 000 g/mol, par exemple de l'ordre de 6 000 g/mol, il faut engager des quantités importantes d'acide thiolactique ou, de manière plus générale, d'agent de transfert.

D'autres procédés encore ont recours à l'hypophosphite de sodium, de formule chimique NaPO₂H₂, en tant qu'agent de transfert de chaîne et d'oxydo-réduction, en présence d'eau oxygénée ou de générateur de radicaux. Le document GB 771 573 A1 notamment décrit un tel procédé. Cela présente l'inconvénient majeur de nécessiter des quantités importantes d'hypophosphite de sodium, une fraction du phosphore se retrouvant greffée dans le polymère, une autre fraction du phosphore se retrouvant sous forme de sels de phosphate dans les eaux de procédé. Ceci constitue, d'une part, un inconvénient lors de l'utilisation du polymère et, d'autre part, un polluant pour l'environnement.

### Brève description de l'invention

Un objet de la présente invention est de proposer un procédé de préparation d'un polymère de l'acide (méth)acrylique présentant une masse moléculaire inférieure à 8 000 g/mol, par exemple inférieure à 7 000 g/mol, ce procédé permettant d'obtenir une solution aqueuse de polymères qui contienne moins de sous-produits du type sulfure de carbone ou sulfure d'hydrogène, de manière à réduire les risques sur l'être humain et sur l'environnement lors de la synthèse du polymère, mais également lors de l'utilisation de la solution polymérique.

Un autre objet encore de la présente invention est de réduire la quantité de polluants dans les eaux du procédé, liés à l'utilisation de réactifs comportant du soufre et du phosphore.

Un autre objet de la présente invention est de proposer un procédé de préparation d'un polymère polyacrylique sans solvant, c'est-à-dire qui ne génère pas de composés organiques volatils.

Un autre objet encore de la présente invention est de proposer un procédé de fabrication d'un polymère présentant un bon indice IP tout en maîtrisant les coûts associés au procédé.

Un autre objet de la présente invention est de proposer un procédé de fabrication d'une solution aqueuse de polymères qui contienne peu de monomères non polymérisés.

### Description détaillée de l'invention

L'inventeur a mis au point un procédé de préparation, sans solvant, d'un polymère de l'acide (méth)acrylique en solution, ledit polymère présentant une masse moléculaire inférieure à 8 000 g/mol et un indice de polydispersibilité IP compris entre 2 et 5, par exemple entre 2 et 3, comprenant les étapes suivantes :
a) on introduit de l'eau dans un réacteur de synthèse,
b) on chauffe le réacteur à une température d'au moins 60°C,
c) on introduit dans le réacteur, de manière continue et simultanée, les composés suivants :
   c1) le ou les monomère(s) (méth)acrylique(s) à polymériser,
   c2) un système initiateur de polymérisation,
   c3) un composé de formule (I) : 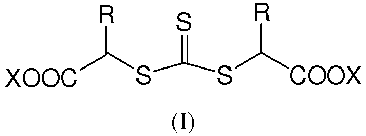
   selon laquelle :
   - X représente Na, K ou H, et
   - R représente une chaîne alkyle comportant de 1 à 5 atomes de carbone, en quantité telle que le pourcentage massique (poids/poids) entre ledit composé de formule (I) et ledit(lesdits) monomères (méth)acrylique(s) est compris entre 0,1 et 2,5 %,
procédé selon lequel on introduit dans le réacteur de synthèse, au cours de l'étape a) et/ou de l'étape c), de l'hypophosphite de sodium NaPO₂H₂ ou un de ses dérivés en quantité totale telle que le pourcentage massique (poids/poids) entre le NaPO₂H₂ et ledit(lesdits) monomère(s) (méth)acrylique(s) est compris entre 2,9 et 5,8 % en poids.

Le procédé de la présente invention permet en effet d'obtenir des polymères qui présentent une masse moléculaire inférieure à 8 000 g/mol, par exemple inférieure à 7 000 g/mol, par exemple de l'ordre de 6 000 g/mol.

Selon un mode de réalisation de la présente invention, les polymères présentent une masse moléculaire supérieure à 500 g/mol, par exemple supérieure à 1 000 g/mol.

Le procédé de la présente invention est réalisé sans solvant organique. Par « solvant » ou « solvant organique », on entend toute substance inerte, vis-à-vis des réactifs et des produits de réaction en phase liquide à sa température d'utilisation, dont la fonction est de diluer d'autres substances sans les modifier chimiquement et sans se modifier lui-même.

On notera que le procédé de la présente invention n'est pas un procédé de polymérisation radicalaire de type RAFT du fait, d'une part, de la quantité de composés de formule (I) utilisée et, d'autre part, de l'ordre d'introduction des réactifs dans le réacteur de synthèse. Ainsi, le procédé de la présente invention permet d'obtenir une solution aqueuse de polymères qui, avantageusement, d'une part, comporte moins de polymères soufrés de l'acide (méth)acrylique qu'une solution de polymères obtenue suite à un procédé de polymérisation radicalaire de type RAFT ; d'autre part, la solution obtenue par le procédé comportant elle-même moins de sous-produits de réactions de type H₂S ou CS₂ que la solution de polymères obtenue suite à un procédé de polymérisation radicalaire de type RAFT. Bien que l'indice de polydispersibilité du polymère poly(méth)acrylique obtenu soit supérieur à celui que l'on peut obtenir par le biais d'un procédé de polymérisation radicalaire de type RAFT, une telle solution aqueuse de polymères obtenue selon le procédé de la présente invention comporte un degré de pureté plus grand qu'une solution obtenue par un procédé de polymérisation radicalaire de type RAFT.

Ainsi, le procédé de l'invention permet de réduire la contamination du polymère obtenu, ainsi que la production de sous-produits polluants type CS₂ ou H₂S, du fait que le pourcentage massique entre le composé de formule (I) et les monomères à polymériser est réduit à une valeur comprise entre 0,1 et 2,5 %.

Le procédé de la présente invention permet, en outre, de résoudre l'un des problèmes techniques majeurs de la présente invention, à savoir proposer un procédé de préparation d'un polymère de masse molaire inférieure à 8 000 g/mol, par exemple inférieure à 6 000 g/mol.

Le procédé de la présente invention présente, en outre, l'avantage de permettre un taux de conversion élevé dans un temps de réaction raisonnable pour l'industrie. Selon un mode de réalisation du procédé selon l'invention, le temps de réaction de l'étape c) est inférieur à 4 heures, par exemple inférieur à 3 heures.

L'étape c) du procédé de la présente invention met également en œuvre un système initiateur de polymérisation.

Par « un système initiateur de polymérisation » ou « système amorceur de polymérisation », on entend un système capable d'initier la polymérisation des monomères. Il s'agit classiquement d'un composé chimique ayant la capacité de générer des radicaux libres.

Selon un aspect de la présente invention, le système initiateur de polymérisation c2) est choisi dans le groupe consistant en le peroxyde d'hydrogène, les persulfates de sodium, les persulfates de potassium, les persulfates d'ammonium, les hydroperoxydes et un mélange d'au moins deux de ces composés.

Selon un aspect de la présente invention, le système initiateur de polymérisation c2) est le peroxyde d'hydrogène.

L'étape c) du procédé de la présente invention met également en œuvre au moins un composé de formule (I) : 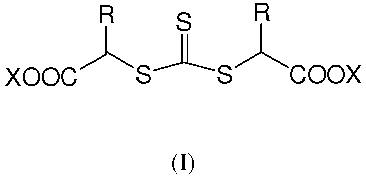 formule (I) selon laquelle :
- X représente Na, K ou H, et
- R représente une chaîne alkyle comportant de 1 à 5 atomes de carbone.

Par « chaîne alkyle comportant de 1 à 5 atomes de carbone », on entend une chaîne méthyle, éthyle, propyle, isopropyle, butyle, tert-butyle, isobutyle ou pentyle.

Selon la présente invention, le pourcentage massique (poids/poids) entre ledit composé de formule (I) et ledit(lesdits) monomère(s) (méth)acrylique(s) est compris entre 0,1 et 2,5 %.

Selon un mode réalisation de la présente invention, le pourcentage massique (poids/poids) entre ledit composé de formule (I) et ledit(lesdits) monomère(s) (méth)acrylique(s) est compris entre 0,15 et 2 %.

Selon un autre mode réalisation de la présente invention, le pourcentage massique (poids/poids) entre ledit composé de formule (I) et ledit(lesdits) monomère(s) (méth)acrylique(s) est compris entre 0,15 et 1,5 %.

Selon un mode réalisation de la présente invention, ledit composé de formule (I) est le composé (IV), c'est-à-dire le composé (I) dans lequel X représente Na et R représente CH₃, et le pourcentage massique (poids/poids) entre ledit composé de formule (I) et ledit(lesdits) monomère(s) (méth)acrylique(s) est compris entre 0,1 et 1,75 %, par exemple entre 0,5 et 1,5 %.

Selon un autre mode réalisation de la présente invention, ledit composé de formule (I) est le composé (IV), c'est-à-dire le composé (I) dans lequel X représente Na et R représente CH₃, et le pourcentage massique (poids/poids) entre ledit composé de formule (I) et ledit(lesdits) monomère(s) (méth)acrylique(s) est compris entre 0,15 et 1,5 %.

Les bornes de ces gammes sont incluses dans la portée de la présente invention.

L'introduction des constituants dans le réacteur de synthèse se fait « de manière continue », c'est-à-dire à vitesse constante ou variable, mais sans arrêt de l'introduction. Egalement, l'introduction des constituants dans le réacteur de synthèse se fait « de manière simultanée », c'est-à-dire que les différents constituants sont introduits concomitamment.

Selon un mode de réalisation du procédé de la présente invention, l'introduction des constituants dans le réacteur de synthèse se fait « de manière proportionnelle », c'est-à-dire que la proportion de chaque constituant du mélange introduite dans le réacteur de synthèse reste constante au cours du temps de réaction, vis-à-vis des autres constituants du mélange.

Par « le ou les monomère(s) (méth)acrylique(s) à polymériser », on entend que le procédé de l'invention vise à fabriquer soit un polymère constitué exclusivement d'acide acrylique (homopolymère d'acide acrylique), soit un polymère constitué exclusivement d'acide méthacrylique (homopolymère d'acide méthacrylique) ou alternativement un polymère constitué d'un mélange d'acide acrylique et d'acide méthacrylique (copolymère acide acrylique-acide méthacrylique). Dans ce dernier cas, selon un aspect de l'invention, le ratio molaire entre acide acrylique et acide méthacrylique peut varier entre 1:100 et 100:1, par exemple entre 1:1 et 100:1, ou entre 1:1 et 50:1.

Selon un autre aspect de la présente invention, ledit composé de formule (I) est le dipropyl trithiocarbonate (DPTTC, CAS No. 6332-91-8) ou ses sels, par exemple son sel disodique (trithiocarbonate de dipropionate de sodium, CAS No. 86470-33-2, Mw = 298,31 g/mol), tel que représenté par la formule (IV) ci-dessous :

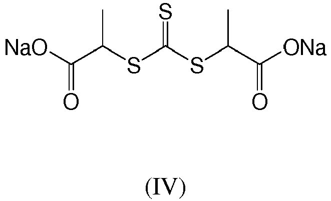

Le procédé de l'invention est également caractérisé en ce qu'on introduit dans le réacteur de synthèse, au cours de l'étape a) et/ou de l'étape c), de l'hypophosphite de sodium NaPO₂H₂ ou un de ses dérivés en quantité totale telle que le pourcentage massique (poids/poids) entre le NaPO₂H₂ et ledit(lesdits) monomère(s) (méth)acrylique(s) est compris entre 2,9 et 5,8 % en poids.

Il est possible d'utiliser, dans le procédé de l'invention, toute forme d'hypophosphite de sodium, hydratée ou non. On peut par exemple utiliser de l'hypophosphite de sodium sous forme anhydre NaPO₂H₂ ou de l'hypophosphite de sodium sous forme monohydraté NaPO₂H₂,H₂O. Dans ce cas, la quantité utilisée est telle que le pourcentage massique (poids/poids) entre le NaPO₂H₂,H₂O et ledit(lesdits) monomère(s) (méth)acrylique(s) est compris entre 3,5 et 7 % en poids.

Selon un aspect de la présente invention, l'hypophosphite de sodium NaPO₂H₂ est introduit dans le réacteur en une quantité totale telle que le pourcentage massique (poids/poids) entre le NaPO₂H₂ et ledit(lesdits) monomère(s) (méth)acrylique(s) est compris entre 3,3 et 5,4 % en poids.

Selon un autre aspect de la présente invention, l'hypophosphite de sodium NaPO₂H₂ est introduit dans le réacteur en une quantité totale telle que le pourcentage massique (poids/poids) entre le NaPO₂H₂ et ledit(lesdits) monomère(s) (méth)acrylique(s) est compris entre 4,1 et 5,4 % en poids.

Selon un aspect du procédé de la présente invention, on introduit la totalité de l'hypophosphite de sodium dans le réacteur de synthèse au cours de l'étape a).

Les polymères sont généralement caractérisés par deux indices/grandeur/valeur :
- l'indice de polymolécularité IP (également appelé de manière équivalente polydispersité PD) ; et
- le poids moléculaire en poids.

L'indice de polymolécularité correspond à la distribution des masses molaires des différentes macromolécules au sein du polymère.

Si toutes les macromolécules présentent une même longueur (et donc une même masse moléculaire), cet indice est proche de 1. Si par contre, les macromolécules présentent des longueurs différentes (donc des masses moléculaires différentes), l'indice IP est supérieur à 1.

Pour que le polymère présente une bonne efficacité dans différentes applications, on tente généralement de rapprocher le plus possible la valeur de l'IP de 1.

Néanmoins, dans le cadre de la présente invention, on cherche à obtenir un polymère en solution qui contienne peu de sous-produits de réaction et un « bon indice IP ». Par « bon indice IP », on entend un indice IP compris entre 2 et 5, notamment entre 1,5 et 2,8.

Selon la présente invention, le polymère en solution obtenu selon le procédé décrit présente une masse moléculaire inférieure à 8 000 g/mol et un indice de polydispersibilité IP compris entre 2 et 3.

Selon un aspect de la présente invention, les conditions réactionnelles sont telles que le taux de conversion des monomères à polymériser est supérieur à 98,8 %.

Autrement dit, la solution de polymère de l'acide (méth)acrylique obtenue contient une quantité de monomère(s) (méth)acrylique(s) non polymérisés inférieure à 1,2 % en poids, tel que déterminée par chromatographie liquide à haute performance (HPLC).

La quantité de monomères résiduels (acide acrylique ou acide méthacrylique) peut être évaluée par chromatographie liquide à haute pression (CHLP). Dans cette méthode, les composants constitutifs du mélange sont séparés sur une phase stationnaire, et détectés par un détecteur UV. Après étalonnage du détecteur, on peut à partir de l'aire du pic correspondant au composé acrylique obtenir la quantité d'acide (méth)acrylique résiduel.

Cette méthode est notamment décrite dans le manuel « Chimie Organique Expérimentale », par M. Chavanne, A. Julien, G. J. Beaudoin, E. Flamand, deuxième Edition, Editions Modulo, chapitre 18, pages 271-325.

Selon un autre aspect de la présente invention, les conditions réactionnelles sont telles que le taux de conversion des monomères à polymériser est supérieur à 99,7 %. Dans ce cas, la quantité de monomères résiduels est inférieure à 0,3 % ou inférieure à 3 000 ppm (sec/sec).

Selon un autre aspect de la présente invention, les conditions réactionnelles sont telles que le taux de conversion des monomères à polymériser est supérieur à 99,9 %. Dans ce cas, la quantité de monomères résiduels est inférieure à 0,1 % ou inférieure à 1 000 ppm (sec/sec).

Selon un aspect de l'invention, la solution de polymère de l'acide (méth)acrylique obtenue contient une quantité d'ions phosphates HPO₄²⁻ inférieure à 0,4 % en poids, tel que déterminée par chromatographie ionique.

Selon un aspect de la présente invention, selon l'étape b) du procédé, on chauffe le réacteur à une température d'au moins 80°C, par exemple à 90°C ou à 95°C.

Selon un autre aspect de l'invention, le procédé ne comporte aucune étape d'élimination des sous-produits de réaction après l'étape c) de polymérisation.

Un autre objet de la présente invention réside dans la description de l'utilisation d'un composé de formule (I) : 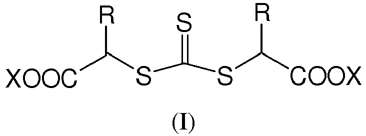 dans laquelle :
- X représente Na, K ou H, et
- R représente une chaîne alkyle comportant de 1 à 5 atomes de carbone,
en remplacement d'une partie de l'hypophosphite de sodium NaPO₂H₂ dans un procédé de préparation sans solvant d'un polymère de l'acide (méth)acrylique en solution, ledit polymère présentant une masse moléculaire inférieure à 8 000 g/mol et un indice de polydispersibilité IP compris entre 2 et 3.

Selon un aspect de l'invention, le procédé de préparation sans solvant dudit polymère de l'acide (méth)acrylique en solution se fait dans des conditions telles que :
- le pourcentage massique (poids/poids) entre ledit composé de formule (I) et ledit(lesdits) monomères (méth)acrylique(s) étant compris entre 0,1 et 2,5 %, et
- le pourcentage massique (poids/poids) entre le NaPO₂H₂ et ledit(lesdits) monomère(s) (méth)acrylique(s) est compris entre 2,9 et 5,8 % en poids.

Un autre objet de l'invention est l'utilisation d'hypophosphite de sodium NaPO₂H₂ ou d'un de ses dérivés et d'un composé de formule (I) : 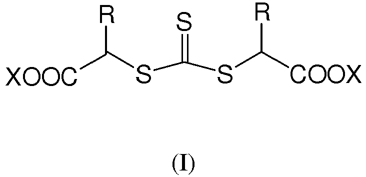 selon laquelle :
- X représente Na, K ou H et
- R représente une chaîne alkyle comportant de 1 à 5 atomes de carbone,
pour préparer un polymère de l'acide (méth)acrylique en solution, ledit polymère présentant une masse moléculaire inférieure à 8 000 g/mol et un indice de polydispersibilité IP compris entre 2 et 5 ; pour laquelle le pourcentage massique (poids/poids) entre ledit composé de formule (I) et ledit acide (méth)acrylique est compris entre 0,1 et 2,5 % et le pourcentage massique (poids/poids) entre le NaPO₂H₂ et ledit acide (méth)acrylique est compris entre 2,9 et 5,8 % en poids.

### EXEMPLES

Dans chacun des exemples suivants, la masse moléculaire des polymères selon l'invention est déterminée par chromatographie d'exclusion stérique (CES) ou en anglais « Gel Permeation Chromatography » (GPC).

Une telle technique met en œuvre un appareil de chromatographie liquide de marque WATERS™ doté d'un détecteur. Ce détecteur est un détecteur de concentration réfractométrique de marque WATERS™.

Cet appareillage de chromatographie liquide est doté d'une colonne d'exclusion stérique convenablement choisie par l'homme du métier afin de séparer les différents poids moléculaires des polymères étudiés.

La phase liquide d'élution est une phase aqueuse ajustée à pH 9,00 par de la soude 1N contenant 0,05M de NaHCO3, 0,1M de NaNO3, 0,02M de triétanolamine et 0,03 % de NaN3.

De manière détaillée, selon une première étape, on dilue à 0,9 % sec la solution de polymérisation dans le solvant de solubilisation de la CES, qui correspond à la phase liquide d'élution de la CES à laquelle est ajoutée 0,04 % de diméthylformamide qui joue le rôle de marqueur de débit ou étalon interne. Puis on filtre à 0,2 µm. 100 µL sont ensuite injectés dans l'appareil de chromatographie (éluant : une phase aqueuse ajustée à pH 9,00 par de la soude 1N contenant 0,05 M de NaHCO₃, 0,1M de NaNO₃, 0,02 M de triétanolamine et 0,03 % de NaN₃).

L'appareil de chromatographie liquide contient une pompe isocratique (WATERS™ 515) dont le débit est réglé à 0,8 ml/min. L'appareil de chromatographie comprend également un four qui lui-même comprend en série le système de colonnes suivant : une précolonne de type GUARD COLUMN ULTRAHYDROGEL WATERS™ de 6 cm de long et 40 mm de diamètre intérieur, et une colonne linéaire de type ULTRAHYDROGEL WATERS™ de 30 cm de long et 7,8 mm de diamètre intérieur. Le système de détection quant à lui se compose d'un détecteur réfractométrique de type RI WATERS™ 410. Le four est porté à la température de 60°C, et le réfractomètre est porté à la température de 45°C.

L'appareil de chromatographie est étalonné par des étalons de polyacrylate de sodium en poudre de différentes masses moléculaires certifiées pour le fournisseur: POLYMER STANDARD SERVICE ou AMERICAN POLYMER STANDARDS CORPORATION.

L'indice de polydispersibilité IP du polymère est le rapport de la masse moléculaire moyenne en masse Mw sur la masse moléculaire en nombre Mn.

La quantité de monomères résiduels est mesurée selon des techniques classiques, connues de l'homme du métier, par exemple par chromatographie liquide à haute pression (CHLP).

### Exemple 1

Cet exemple a pour objet d'illustrer la préparation de polymères d'acide (méth)acrylique selon l'invention, par l'utilisation :
- d'un sel de dipropionate trithiocarbonate (DPTTC) en pourcentage massique (poids/poids) entre ledit sel de DPTTC et ledit(lesdits) monomère(s) (méth)acrylique(s) compris entre 0,1 et 2,5 % (invention) ou en dehors de cette gamme (art antérieur ou hors invention), et
- d'hypophosphite de sodium NaPO₂H₂, en quantité totale telle que le pourcentage massique (poids/poids) entre le NaPO₂H₂ et ledit(lesdits) monomère(s) (méth)acrylique(s) est compris entre 2,9 et 5,8 % en poids (invention) ou en dehors de cette gamme (art antérieur ou hors invention).

### Essai 1 - Art antérieur :

Cet essai illustre un procédé de préparation d'un polymère au moyen d'une polymérisation radicalaire contrôlée de type RAFT.

On charge dans le réacteur de synthèse en verre muni d'une agitation mécanique et d'un chauffage de type bain d'huile 328 g d'eau, 94 g d'agent de transfert de chaîne DPTTC 29 % (soit 27 g de DPTTC 100 % ou 0,092 mole).

On chauffe jusqu'à atteindre une température de 95°C.

On coule, en 2 heures de temps, 328 g d'acide acrylique 100 % (soit 4,558 moles) et en parallèle :
- 4 g de persulfate de sodium Na₂S₂O₈ (soit 0,017 mole) dissous dans 76 g d'eau, et
- 1,15 g de métabisulfite de sodium Na₂S₂O₅ (soit 0,006 mole) dissous dans 76 g d'eau.

On maintient ensuite la température pendant 2h, puis on injecte 3,2 g de peroxyde d'hydrogène 130V dilué dans 46 g d'eau.

On neutralise ensuite sous agitation avec 381 g de soude 50 % diluée dans 48 g d'eau. On cuit à nouveau 1 heure à 95°C puis on laisse refroidir à température ambiante.

### Essai 2 - Hors invention :

Selon cet essai, on reproduit les conditions de l'essai 1 en diminuant d'un facteur 10 la quantité d'agent de transfert de chaîne DPTTC utilisé.

On charge dans le réacteur de synthèse en verre muni d'une agitation mécanique et d'un chauffage de type bain d'huile 328 g d'eau, 19 g d'agent de transfert de chaîne DPTTC 14 % (soit 2,7 g de DPTTC 100 % ou 0,0092 mole).

On chauffe jusqu'à atteindre une température de 95°C.

On coule, en 2 heures de temps, 328 g d'acide acrylique 100 % (soit 4,558 moles) et en parallèle :
- 4 g de persulfate de sodium Na₂S₂O₈ (soit 0,017 mole) dissous dans 76 g d'eau, et
- 1,15 g de métabisulfite de sodium Na₂S₂O₅ (soit 0,006 mole) dissous dans 76 g d'eau.

On maintient ensuite la température pendant 2h, puis on injecte 3,2 g de peroxyde d'hydrogène 130V dilué dans 46 g d'eau.

On neutralise ensuite sous agitation avec 381 g de soude 50 % diluée dans 48 g d'eau. On cuit à nouveau 1 heure à 95°C puis on laisse refroidir à température ambiante.

### Essai 3 - Art antérieur :

Cet essai correspond à l'essai 2 de l'exemple 2 du document WO 2005/095466 (Coatex). On charge dans le réacteur de synthèse muni d'une agitation mécanique et d'un chauffage de type bain d'huile 150 g d'eau, 20,31 g d'agent de transfert de chaîne DPTTC 14,4 % (soit 2,92 g de DPTTC 100 %), ainsi que 50 g d'acide acrylique 100 %.

On ajoute ensuite la source de radicaux libres, en l'espèce 0,4 g de V501. On chauffe jusqu'à atteindre une température de 95°C. On maintient ensuite la température pendant 2h, puis on laisse refroidir à température ambiante.

On neutralise alors avec 55 g de soude à 50 %.

### Essai 4 - Art antérieur :

Cet essai illustre un procédé de préparation d'un polymère exclusivement à l'hypophosphite de sodium monohydraté.

On charge dans un réacteur de synthèse muni d'une agitation mécanique et d'un chauffage de type bain d'huile 209 g d'eau. On ajoute 0,1 g de sulfate de fer heptahydraté et 0,015 g de sulfate de cuivre pentahydraté.

On chauffe le milieu à 90°C puis on ajoute de manière simultanée et continue, en 2h de temps :
- 305 g d'acide acrylique et 13 g d'eau, et
- 25,6 g de NaPO₂H₂,H₂O dissous dans 32 g d'eau.

On cuit 1h30 à 90°C.

On neutralise avec de la soude 50 % jusqu'à obtenir un pH = 8.

### Essai 5 - Invention :

On charge dans un réacteur de synthèse muni d'une agitation mécanique et d'un chauffage de type bain d'huile 198 g d'eau et 13 g de NaPO₂H₂,H₂O (ou 10,8 g de NaPO₂H₂).

On chauffe le milieu à 90°C puis on ajoute de manière simultanée et continue :
- en 1h30 de temps :
   * 208,6 g d'acide acrylique dilué avec 23,2 g d'eau.
   * une solution mère de 13,41 g de sel disodique de DPTTC à 14 % (soit 1,88 g de DPTTC 100 %),
- en 2h10 de temps, 7,44 g de peroxyde d'hydrogène 130V dilué dans 132 g d'eau.

On cuit 1h30 à 90°C.

On neutralise avec 228 g de soude 50 %.

### Essai 6 - Invention :

On charge dans un réacteur de synthèse muni d'une agitation mécanique et d'un chauffage de type bain d'huile 198 g d'eau et 12 g de NaPO₂H₂,H₂O.

On chauffe le milieu à 90°C puis on ajoute de manière simultanée et continue :
- en 1h30 de temps :
   * 208,6 g d'acide acrylique dilué avec 23,2 g d'eau,
   * une solution mère de 13,41 g de sel disodique de DPTTC à 14 % (soit 1,88 g de DPTTC 100 %),
- en 2h10 de temps, 7,44 g de peroxyde d'hydrogène 130V dilué dans 132 g d'eau.

On cuit 1h30 à 90°C.

On neutralise avec 228 g de soude 50 %.

### Essai 7 - Invention :

On charge dans un réacteur de synthèse muni d'une agitation mécanique et d'un chauffage de type bain d'huile 198 g d'eau.

On chauffe le milieu à 90°C puis on ajoute de manière simultanée et continue :
- en 2h de temps :
   * 208,6 g d'acide acrylique,
   * une solution mère de 10,29 g de sel disodique de DPTTC à 20 % (soit 2,05 g de DPTTC 100 %),
   * 12,1 g de NaPO₂H₂,H₂O dissous dans 40 g d'eau.
- en 2h10 de temps, 7,1 g de peroxyde d'hydrogène 130V dilué dans 80 g d'eau.

On cuit 1h30 à 90°C.

On neutralise avec 228 g de soude 50 %.

### Essai 8 - Invention :

On charge dans un réacteur de synthèse muni d'une agitation mécanique et d'un chauffage de type bain d'huile 198 g d'eau et 6,0 g de NaPO₂H₂,H₂O.

On chauffe le milieu à 90°C puis on ajoute de manière simultanée et continue :
- en 2h de temps :
   * 208,6 g d'acide acrylique,
   * une solution mère de 10,3 g de sel disodique de DPTTC à 20 % (soit 2,06 g de DPTTC 100 %),
   * 6,0 g de NaPO₂H₂,H₂O dissous dans 40 g d'eau.
- en 2h10 de temps, 7,1 g de peroxyde d'hydrogène 130V dilué dans 90 g d'eau.

On cuit 1h30 à 90°C.

On neutralise avec 228 g de soude 50 %.

### Essai 9 - Invention :

On charge dans un réacteur de synthèse muni d'une agitation mécanique et d'un chauffage de type bain d'huile 198 g d'eau et 10,4 g de NaPO₂H₂,H₂O.

On chauffe le milieu à 90°C puis on ajoute de manière simultanée et continue :
- en 2h de temps :
   * 208,6 g d'acide acrylique,
   * une solution mère de 15,6 g de sel disodique de DPTTC à 20 % (soit 3,12 g de DPTTC 100 %),
- en 2h10 de temps, 7,1 g de peroxyde d'hydrogène 130V dilué dans 90 g d'eau.

On cuit 1h30 à 90°C.

On neutralise avec 228 g de soude 50 %.

### Essai 10 - Invention :

On charge dans un réacteur de synthèse muni d'une agitation mécanique et d'un chauffage de type bain d'huile 198 g d'eau et 8,3 g de NaPO₂H₂,H₂O.

On chauffe le milieu à 90°C puis on ajoute de manière simultanée et continue :
- en 2h de temps :
   * 208,6 g d'acide acrylique,
   * une solution mère de 15,6 g de sel disodique de DPTTC à 20 % (soit 3,12 g de DPTTC 100 %),
- en 2h10 de temps, 7,1 g de peroxyde d'hydrogène 130V dilué dans 90 g d'eau.

On cuit 1h30 à 90°C.

On neutralise avec 228 g de soude 50 %.

### Essai 11 - Invention :

On charge dans un réacteur de synthèse muni d'une agitation mécanique et d'un chauffage de type bain d'huile 198 g d'eau et 10,4 g de NaPO₂H₂,H₂O.

On chauffe le milieu à 90°C puis on ajoute de manière simultanée et continue :
- en 2h de temps :
   * 208,6 g d'acide acrylique,
   * une solution mère de 26,1 g de sel disodique de DPTTC à 20 % (soit 5,22 g de DPTTC 100 %),
- en 2h10 de temps, 7,1 g de peroxyde d'hydrogène 130V dilué dans 90 g d'eau.

On cuit 1h30 à 90°C.

On neutralise avec 228 g de soude 50 %.

**Tableau 1**

| **Essai n°** | **INVention Art ANTérieur** | **% massique DPTTC / monomères** | **% massique NaPO₂H₂/ monomères** | **Mw (g/mol)** | **IP** | **ES (%)** | **pH** | **AA résiduels (%)** |
|---|---|---|---|---|---|---|---|---|
| 1 | AANT | 8,23 | *na* | 5 065 | 1,5 | 36,6 | 9 | 0,13 |
| 2 | HINV | 0,82 | *na* | 43 400 | 3,5 | 36,6 | 8,5 | 0,03 |
| 3 | AANT | 5,8 | *na* | 4 947 | 1,55 | 36,6 | 9 | 0,5 |
| 4 | AANT | *na* | 7,0 | 4 780 | 2,3 | 40,0 | 8,0 | 0,02 |
| 5 | INV | 0,9 | 5,17 | 4 830 | 2,2 | 36,6 | 6,89 | 0,03 |
| 6 | INV | 0,9 | 4,77 | 5 325 | 2,3 | 36,6 | 7,02 | 0,04 |
| 7 | INV | 0,98 | 4,77 | 7 900 | 2,9 | 37,1 | 7,1 | <0,001 |
| 8 | INV | 0,98 | 4,77 | 5 500 | 2,3 | 37,0 | 7,1 | <0,001 |
| 9 | INV | 1,5 | 4,14 | 5 760 | 2,4 | 39,2 | 7,0 | 0,15 |
| 10 | INV | 1,5 | 3,30 | 7 050 | 2,6 | 38,2 | 6,9 | 0,22 |
| 11 | INV | 2,5 | 4,14 | 5 750 | 2,3 | 38,1 | 7,2 | 1,26 |

| | | | | | | | | |
|---|---|---|---|---|---|---|---|---|
| *na* : non applicable | | | | | | | | |

### Exemple 2 :

Cet exemple a pour objet d'illustrer les teneurs en sulfure de carbone, en sulfure d'hydrogène et en ions phosphate de différents échantillons mettant en œuvre des solutions de polymères de l'art antérieur ou des solutions de polymères selon la présente invention.

Les analyses des différents échantillons sont réalisées à l'aide d'une chromatographie gazeuse Agilent G1530 couplée à un spectromètre de masse Agilent G2577A comme détecteur. L'injection est réalisée grâce à un espace de tête Agilent G1888. On utilise une colonne Agilent HP5 30 m x 0,25 mm x 1 µm (phase 5 % phényl et 95 % méthylsiloxane) qui permet l'élution des analyses. L'analyse est réalisée à partir de 2 grammes en l'état des échantillons. La quantification est réalisée par la méthode des ajouts dosés.

Les analyses des différents échantillons sont également réalisées à l'aide d'une chromatographie ionique Metrohm 761 Compact IC équipée d'un détecteur conductimétrique, d'un suppresseur chimique et d'un suppresseur de CO₂. On utilise une colonne échangeuse d'anions Metrohm Asupp5 250 et deux pré-colonnes (Metrohm Asupp5 et RP) afin d'éluer les anions dont l'HPO₄²⁻.

L'analyse est réalisée à partir de 0,1 g d'échantillon dilué dans 60 g d'eau distillée. La quantification est réalisée à l'aide d'un étalonnage externe.

On réalise 3 synthèses :
- un dispersant polyacrylique préparé au moyen d'un procédé de polymérisation radicalaire contrôlée de type RAFT, selon l'essai 1 de l'exemple 1 ci-dessus,
- un dispersant polyacrylique préparé au moyen d'un procédé de polymérisation selon l'essai 4 de l'exemple 1 ci-dessus,
- une solution de polymère de l'acide polyacrylique préparée au moyen d'un procédé selon la présente invention, selon l'essai 6 de l'exemple 1 ci-dessus.

On obtient respectivement les échantillons 1, 2 et 3.

Les résultats d'analyses sur ces échantillons sont consignés dans le tableau 1 ci-dessous.

**Tableau 2**

| Echantillons | INVention Art ANTérieur | Teneur en HPO₄²⁻ (ppm) | Teneur en H₂S (ppm) | Teneur en CS₂ (ppm) |
|---|---|---|---|---|
| 1 | AANT - RAFT | *nd* | 200 | *1000* |
| 2 | AANT - hypo | 5 032 | *nd* | *nd* |
| 3 | INV | 3 500 | *nd* | *nd* |

| | | | | |
|---|---|---|---|---|
| *nd* : non détectable | | | | |

L'analyse de l'échantillon 1, c'est-à-dire un dispersant polyacrylique obtenu au moyen d'un procédé RAFT, indique des teneurs importantes en sous-produits soufrés H₂S et CS₂, ce qui constitue un inconvénient majeur du fait de leur toxicité.

L'analyse de l'échantillon 2, c'est-à-dire un dispersant polyacrylique préparé au moyen d'un procédé de l'art antérieur à forte teneur en NaPO₂H₂, indique une forte teneur en ions HPO₄²⁻ résiduels (5 032 ppm).

L'analyse de l'échantillon 3, à savoir une solution de polymère de l'acide polyacrylique préparée au moyen d'un procédé selon la présente invention, montre que les teneurs en H₂S et CS₂ sont non détectables. La teneur en ions phosphate pour des poids moléculaires identiques est nettement inférieure au polymère de l'échantillon 2. Ainsi, les risques sur l'être humain et sur l'environnement lors de la synthèse du polymère, mais également lors de l'utilisation de la solution polymérique sont réduits de manière significative.

## Revendications

1. Procédé de préparation sans solvant d'un polymère de l'acide (méth)acrylique en solution, ledit polymère présentant une masse moléculaire inférieure à 8 000 g/mol et un indice de polydispersibilité IP compris entre 2 et 5, comprenant les étapes suivantes :
a) on introduit de l'eau dans un réacteur de synthèse,
b) on chauffe le réacteur à une température d'au moins 60°C,
c) on introduit dans le réacteur, de manière continue et simultanée, les composés suivants :
c1) le ou les monomère(s) (méth)acrylique(s) à polymériser,
c2) un système initiateur de polymérisation,
c3) un composé de formule (I) : 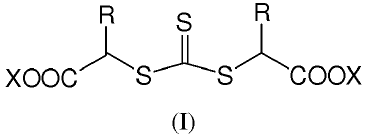
selon laquelle :
- X représente Na, K ou H, et
- R représente une chaîne alkyle comportant de 1 à 5 atomes de carbone,
en quantité telle que le pourcentage massique (poids/poids) entre ledit composé de formule (I) et ledit(lesdits) monomères (méth)acrylique(s) étant compris entre 0,1 et 2,5 %,
procédé selon lequel on introduit dans le réacteur de synthèse, au cours de l'étape a) et/ou de l'étape c), de l'hypophosphite de sodium NaPO₂H₂ ou un de ses dérivés en quantité totale telle que le pourcentage massique (poids/poids) entre le NaPO₂H₂ et ledit(lesdits) monomère(s) (méth)acrylique(s) est compris entre 2,9 et 5,8 % en poids.

2. Procédé selon la revendication 1, selon lequel le système initiateur de polymérisation c2) est le peroxyde d'hydrogène.

3. Procédé selon la revendication 1 ou 2, selon lequel le pourcentage massique (poids/poids) entre ledit composé de formule (I) et ledit(lesdits) monomères (méth)acrylique(s) est compris entre 0,15 et 2 %.

4. Procédé selon l'une quelconque des revendications précédentes, selon lequel ledit procédé ne comporte aucune étape d'élimination des sous-produits de réaction après l'étape c) de polymérisation.

5. Procédé selon l'une quelconque des revendications précédentes, selon lequel l'hypophosphite de sodium NaPO₂H₂ est introduit dans le réacteur en une quantité totale telle que le pourcentage massique (poids/poids) entre l'hypophosphite de sodium NaPO₂H₂ ou un de ses dérivés et ledit(lesdits) monomère(s) (méth)acrylique(s) est compris entre 3,3 et 5,4 % en poids.

6. Procédé selon l'une quelconque des revendications précédentes, selon lequel on introduit la totalité de l'hypophosphite de sodium dans le réacteur de synthèse au cours de l'étape a).

7. Procédé selon l'une quelconque des revendications précédentes, selon lequel la solution de polymère de l'acide (méth)acrylique obtenue contient une quantité de monomère(s) (méth)acrylique(s) non polymérisés inférieure à 1,2 % en poids, tel que déterminée par chromatographie liquide à haute performance (HPLC).

8. Procédé selon l'une quelconque des revendications précédentes, selon lequel la solution de polymère de l'acide (méth)acrylique obtenue contient une quantité d'ions phosphates HPO₄²⁻ inférieure à 0,4 % en poids, tel que déterminée par chromatographie ionique.

9. Procédé selon l'une quelconque des revendications précédentes, selon lequel le composé de formule (I) est tel que R est CH₃ et X est Na.

10. Utilisation d'hypophosphite de sodium NaPO₂H₂ ou d'un de ses dérivés et d'un composé de formule (I) : 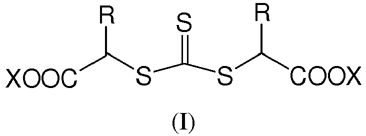 selon laquelle :
- X représente Na, K ou H et
- R représente une chaîne alkyle comportant de 1 à 5 atomes de carbone,
pour préparer un polymère de l'acide (méth)acrylique en solution, ledit polymère présentant une masse moléculaire inférieure à 8 000 g/mol et un indice de polydispersibilité IP compris entre 2 et 5 ; pour laquelle le pourcentage massique (poids/poids) entre ledit composé de formule (I) et ledit acide (méth)acrylique est compris entre 0,1 et 2,5 % et le pourcentage massique (poids/poids) entre le NaPO₂H₂ et ledit acide (méth)acrylique est compris entre 2,9 et 5,8 % en poids.

## Patentansprüche

1. Verfahren zur Herstellung ohne Lösungsmittel eines Polymers aus (Meth)acrylsäure in Lösung, wobei dieses Polymer eine molekulare Masse unter 8.000 g/mol und einen IP-Polydispersitätsfaktor zwischen 2 und 5 aufweist, wobei das Verfahren folgende Schritte umfasst:
a) Einführen von Wasser in einen Synthesereaktor,
b) Erhitzen des Reaktors auf eine Temperatur von mindestens 60 °C,
c) Einführen in den Reaktor, auf kontinuierliche und simultane Weise, folgender Verbindungen:
c1) das oder die zu polymerisierende(n) (Meth)acrylmonomer(e),
c2) ein Polymerisationsinitiatorsystem,
c3) eine Verbindung mit der Formel (I): 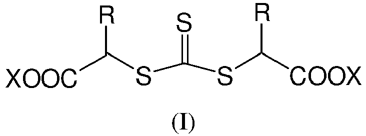
wobei:
- X Na, K oder H darstellt, und
- R eine Alkylkette mit 1 bis 5 Kohlenstoffatomen darstellt,
in einer solchen Menge, dass der prozentuale Massenanteil (Gewicht/Gewicht) zwischen der Verbindung mit der Formel (I) und diesem(diesen) (Meth)acrylmonomer(en) zwischen 0,1 und 2,5 % liegt,
wobei bei diesem Verfahren im Laufe von Schritt a) und/oder Schritt c) Natriumphosphinat NaPO₂H₂ oder eines seiner Derivate in den Synthesereaktor eingeführt wird, in einer solchen Gesamtmenge, dass der prozentuale Massenanteil (Gewicht/Gewicht) zwischen NaPO₂H₂ und diesem(diesen) (Meth)acrylmonomer(en) zwischen 2,9 und 5,8 Gew.-% liegt.

2. Verfahren nach Anspruch 1, bei dem das Polymerisationsinitiatorsystem c2) Wasserstoffperoxid ist.

3. Verfahren nach Anspruch 1 oder 2, bei dem der prozentuale Massenanteil (Gewicht/Gewicht) zwischen der Verbindung mit der Formel (I) und diesem(diesen) (Meth)acrylmonomer(en) zwischen 0,15 und 2 % liegt.

4. Verfahren nach einem beliebigen der vorstehenden Ansprüche, wobei dieses Verfahren keinen Schritt zur Beseitigung von Nebenprodukten der Reaktion nach Schritt c) der Polymerisation umfasst.

5. Verfahren nach einem beliebigen der vorstehenden Ansprüche, bei dem Natriumphosphinat NaPO₂H₂ in den Reaktor eingeführt wird, in einer solchen Gesamtmenge, dass der prozentuale Massenanteil (Gewicht/Gewicht) zwischen Natriumphosphinat NaPO₂H₂ oder einem seiner Derivate und diesem(n) (Meth)acrylmonomer(en) zwischen 3,3 und 5,4 Gew.-% liegt.

6. Verfahren nach einem beliebigen der vorstehenden Ansprüche, bei dem die gesamte Menge an Natriumphosphinat im Laufe von Schritt a) in den Synthesereaktor eingeführt wird.

7. Verfahren nach einem beliebigen der vorstehenden Ansprüche, bei dem die hergestellte Polymerlösung aus (Meth)acrylsäure eine Menge an nicht polymerisiertem(n) (Meth)acrylmonomer(en) unter 1,2 Gew.-% enthält, wie gemäß der Hochleistungsflüssigkeitschromatographie (HPLC) bestimmt wird.

8. Verfahren nach einem beliebigen der vorstehenden Ansprüche, bei dem die hergestellte Polymerlösung aus (Meth)acrylsäure eine Menge an Phosphationen von HPO₄²⁻ unter 0,4 Gew.-% enthält, wie gemäß der Ionenchromatographie bestimmt wird.

9. Verfahren nach einem beliebigen der vorstehenden Ansprüche, bei dem die Verbindung mit der Formel (I) so ausgewählt ist, dass R CH3 und X Na entspricht.

10. Verwendung von Natriumphosphinat NaPO₂H₂ oder eines seiner Derivate und einer Verbindung mit der Formel (I): 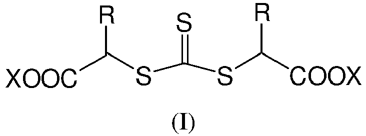 wobei:
- X Na, K oder H darstellt, und
- R eine Alkylkette mit 1 bis 5 Kohlenstoffatomen darstellt,
zur Herstellung eines Polymers aus (Meth)acrylsäure in Lösung, wobei dieses Polymer eine molekulare Masse von weniger als 8.000 g/mol und einen IP-Polydispersitätsindex zwischen 2 und 5 aufweist; wobei der prozentuale Massenanteil (Gewicht/Gewicht) dieser Verbindung mit der Formel (I) und dieser (Meth)acrylsäure zwischen 0,1 und 2,5 % und der prozentuale Massenanteil (Gewicht/Gewicht) zwischen NaPO₂H₂ und dieser (Meth)acrylsäure zwischen 2,9 und 5,8 Gew.-% liegt.

## Claims

1. Solvent-free method for preparing a (meth)acrylic acid polymer in solution, said polymer having a molecular mass of less than 8,000 g/mol and a polydispersity index (PI) between 2 and 5, comprising the following steps:
a) water is introduced into a synthesis reactor,
b) the reactor is heated to a temperature of at least 60°C,
c) the following compounds are introduced into the reactor in a continuous and simultaneous manner:
c1) the (meth)acrylic monomer(s) to be polymerized,
c2) a polymerization initiator system,
c3) a compound of formula (I): 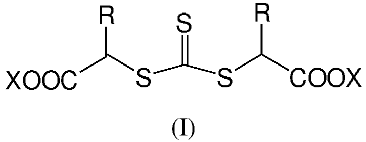 according to which:
- X represents Na, K or H, and
- R represents an alkyl chain comprising 1 to 5 carbon atoms,
in an amount such that the mass percentage (weight/weight) between said compound of formula (I) and said (meth)acrylic monomer(s) is between 0.1 and 2.5%,
method according to which, during step a) and/or step c), sodium hypophosphite NaPO₂H₂ or a derivative thereof is introduced into the synthesis reactor in a total amount such that the mass percentage (weight/weight) between NaPO₂H₂ and said (meth)acrylic monomer(s) is between 2.9 and 5.8% by weight.

2. Method as claimed in claim 1, according to which the polymerization initiator system c2) is hydrogen peroxide.

3. Method as claimed in claim 1 or 2, according to which the mass percentage (weight/weight) between said compound of formula (I) and said (meth)acrylic monomer(s) is between 0.15 and 2%.

4. Method as claimed in any one of the preceding claims, according to which said method does not comprise any step of removing the reaction by-products after the polymerization step c).

5. Method as claimed in any one of the preceding claims, according to which sodium hypophosphite NaPO₂H₂ is introduced into the reactor in a total amount such that the mass percentage (weight/weight) between sodium hypophosphite NaPO₂H₂ or a derivative thereof and said (meth)acrylic monomer(s) is between 3.3 and 5.4% by weight.

6. Method as claimed in any one of the preceding claims, according to which all of the sodium hypophosphite is introduced into the synthesis reactor during step a).

7. Method as claimed in any one of the preceding claims, according to which the (meth)acrylic acid polymer solution obtained contains unpolymerized (meth)acrylic monomer(s) in an amount of less than 1.2% by weight, as determined by high-performance liquid chromatography (HPLC).

8. Method as claimed in any one of the preceding claims, according to which the (meth)acrylic acid polymer solution obtained contains phosphate ions HPO₄²⁻ in an amount of less than 0.4% by weight, as determined by ion chromatography.

9. Method as claimed in any one of the preceding claims, according to which the compound of formula (I) is such that R is CH3 and X is Na.

10. Use of sodium hypophosphite NaPO₂H₂ or a derivative thereof and a compound of formula (I): 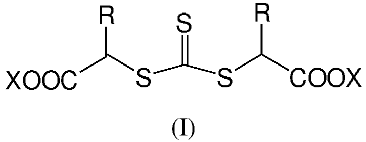 according to which:
- X represents Na, K or H and
- R represents an alkyl chain comprising 1 to 5 carbon atoms,
to prepare a (meth)acrylic acid polymer in solution, said polymer having a molecular mass of less than 8,000 g/mol and a polydispersity index (PI) between 2 and 5 ; for which the mass percentage (weight/weight) between said compound of formula (I) and said (meth)acrylic acid is between 0.1 and 2,5% and mass percentage (weight/weight) between NaPO₂H₂ and said (meth)acrylic acid is between 2.9 and 5.8% by weight.
